# FASCICULE DE BREVET EUROPEEN

(11) **EP 4 436 874 B1**
(45) Date de publication et mention de la délivrance du brevet: **01.10.2025**
(21) Numéro de dépôt: 22818024.6
(22) Date de dépôt: 16.11.2022
(51) Int. Cl.: B64D 11/06, B60N 2/68, B61D 33/00, B60R 22/26, B60N 2/12, B60R 22/20

(54) **SYSTÈME DE FIXATION DE CEINTURE POUR UN SIÈGE À ASSISE MOBILE**
SICHERHEITSGURT-BEFESTIGUNGSSYSTEM FÜR EINEN BEWEGLICHEN SITZ
SEATBELT FASTENING SYSTEM FOR A MOVABLE SEAT

(30) Priorité: 25.11.2021 FR 2112489
(43) Date de publication de la demande: 02.10.2024
(73) Titulaire: Safran Seats, 78370 Plaisir (FR)
(72) Inventeur: GAJEWSKI, Jonathan, 77550 Moissy-Cramayel (FR); CHIPAULT, Stéphane, 77550 Moissy-Cramayel (FR); MARAIS, Joel, 77550 Moissy-Cramayel (FR)
(74) Mandataire: Marconnet, Sébastien
(86) Numéro de dépôt international: PCT/EP2022/082155
(87) Numéro de publication internationale: WO 2023/094242

(56) Documents cités:
- EP-B1- 3 680 173
- FR-A1- 2 888 549
- US-A1- 2012 138 745
- US-A1- 2017 021 930

## Description

La présente invention porte sur un système de fixation de ceinture pour un siège à assise mobile. L'invention trouve une application particulièrement avantageuse, mais non exclusive, avec les sièges d'avion de classe économique.

De façon connue en soi, un siège de classe économique comporte généralement plusieurs places formées chacune par une assise et un dossier inclinable. Certains sièges de classe économique prémium sont conçus de façon à autoriser un déplacement en translation vers l'avant de l'assise par rapport à la structure du siège. La cinématique peut être motorisée au moyen d'un actionneur linéaire muni d'un corps de moteur solidaire de la structure d'assise et d'une tige solidaire de la structure de siège.

Afin de préserver le confort du passager, l'attache de ceinture est disposée directement sur l'assise pour éviter que le bassin du passager soit compressé lors d'un déplacement vers l'avant de l'assise. Suivant une telle configuration, le chemin d'effort observable lors d'un test de certification passe directement dans l'assise et donc à travers le corps de moteur de l'actionneur. Cela est susceptible d'entraîner un déplacement non maîtrisé du corps de moteur posant des problèmes de sécurité.

Le document US2012/138745 A1 décrit un dispositif pour ceinture de sécurité comportant un système d'attache mobile suivant une rainure inclinée par rapport à un plan horizontal. Ce dispositif vise à prévenir le déplacement d'une partie de siège mobile dans le cas d'un accident ou dans des conditions similaires à un accident d'un aéronef.

Le document FR2888549 A1 décrit un dispositif pour ceinture de sécurité de véhicule automobile facilitant le bouclage de la ceinture et comprenant un système d'attache de la ceinture mobile sur une glissière. Le dispositif comporte un bâti destiné à être solidaire du plancher du véhicule et comprenant ladite glissière; ainsi que des moyens pour déplacer le système d'attache entre une position avancée pour laquelle la ceinture peut être aisément attachée et une position de fonctionnement pour laquelle la ceinture est attachée.

L'invention vise notamment à remédier efficacement à cet inconvénient en proposant un siège, notamment pour un avion, comportant:
au moins une assise comportant au moins une structure d'assise, et-une structure basse,- ladite structure d'assise étant mobile par rapport à la structure basse,- la structure basse comportant au moins un élément de guidage s'étendant suivant une direction générale d'extension longitudinale et comprenant une rainure de guidage,- ladite rainure de guidage comportant une première portion s'étendant suivant la direction générale d'extension longitudinale et une deuxième portion, dite portion inclinée, formant un angle non nul par rapport à la direction générale d'extension longitudinale,- au moins une attache de ceinture,caractérisé en ce que ledit siège comporte en outre au moins un support d'attache,- ladite attache de ceinture étant montée rotative par rapport au support d'attache par l'intermédiaire d'un axe d'attache muni d'une tête coopérant avec la rainure de guidage,- ledit support d'attache étant monté rotatif par rapport à la structure d'assise par l'intermédiaire d'un axe de support muni d'une tête coopérant avec la rainure de guidage,- la tête de l'axe d'attache étant disposée à l'intérieur de la portion inclinée de la rainure de guidage lorsque le siège se trouve dans une position relevée.

L'invention permet ainsi à l'attache de ceinture de suivre la cinématique de l'assise en mouvement de façon à garantir le confort du passager. En outre, l'axe de l'attache de ceinture étant en contact permanent avec la structure basse, l'effort passant par l'attache de ceinture lors d'un test de certification est repris majoritairement par la structure basse du siège. L'invention évite ainsi un déplacement non maîtrisé du corps de moteur d'un actionneur motorisé.

Selon une réalisation de l'invention, un écart mesuré entre l'axe d'attache et l'axe de support est inférieur à une longueur de la portion inclinée de la rainure de guidage. On garantit ainsi un jeu entre l'axe d'attache et l'extrémité de la rainure de guidage afin que les positions relevée et de confort de la cinématique soient gérées électriquement par l'actionneur sans risque d'interférence mécanique. Le jeu est obtenu en ajoutant, à l'extrémité de la rainure de guidage, une surcourse de quelques millimètres par rapport à la variation maximale de la position de la structure d'assise lorsque le siège est en position relevée.

Selon une réalisation de l'invention, ledit siège comporte un actionneur motorisé de façon à permettre un déplacement automatique dudit siège de la position relevée vers une position de repos.

Selon une réalisation de l'invention, l'actionneur motorisé comporte un corps de moteur fixé sur l'un des éléments parmi: la structure d'assise et la structure basse ainsi qu'une tige de guidage ayant une extrémité fixée sur l'autre des éléments parmi: la structure d'assise et la structure basse.

Selon une réalisation de l'invention, ledit siège comporte une glissière apte à assurer un guidage d'une partie avant de la structure d'assise.

Selon une réalisation de l'invention, la glissière comporte un rail fixé sur la structure d'assise apte à coulisser suivant un guide monté rotatif par rapport à une extrémité avant de l'élément de guidage.

Selon une réalisation de l'invention, la glissière est configurée de telle façon que la structure d'assise forme un angle non nul par rapport à un plan horizontal lorsque le siège se trouve dans une position de confort.

Selon une réalisation de l'invention, la structure basse comporte deux crosses disposées de part et d'autre de la structure d'assise, l'élément de guidage étant fixé sur une crosse correspondante.

Selon une réalisation de l'invention, ledit siège comporte en outre une structure de dossier montée rotative par rapport à la structure d'assise.

L'invention a également pour objet un avion comportant au moins un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[ Fig. 1] La figure 1 est une vue en perspective d'un siège d'avion selon la présente invention;
[ Fig. 2a] [Fig. 2b] Les figures 2a et 2b sont des vues en perspective illustrant la position de la structure d'assise du siège d'avion selon l'invention respectivement lorsque le siège se trouve dans une position relevée et dans une position de confort;
[ Fig. 3] La figure 3 est une vue en perspective détaillée d'une attache de ceinture et d'un support d'attache d'un siège d'avion selon l'invention;
[ Fig. 4a] [Fig. 4b] Les figures 4a et 4b sont des vues illustrant un positionnement de l'attache de ceinture et du support d'attache respectivement lorsque le siège se trouve dans une position relevée et dans une position de confort;
[ Fig. 5] La figure 5 est une vue en perspective éclatée de la liaison entre l'attache de ceinture et le support d'attache du siège d'avion selon l'invention;
[ Fig. 6] La figure 6 est une vue en perspective éclatée de la liaison entre le support d'attache et la structure d'assise du siège d'avion selon l'invention;
[ Fig. 7] La figure 7 est une vue en perspective détaillée d'une glissière disposée entre un élément de guidage et la structure d'assise du siège d'avion selon la présente invention;
[ Fig. 8] La figure 8 est une vue en perspective éclatée de la liaison entre un support et un guide d'une glissière du siège selon la présente invention.

Les éléments identiques, similaires ou analogues conservent la même référence d'une figure à l'autre. Par ailleurs, les termes d'orientation du type "avant", "arrière", "horizontal", ou "vertical" sont entendus par référence au sens commun que leur donnerait un utilisateur assis sur un siège selon l'invention installé à l'intérieur d'une cabine d'avion.

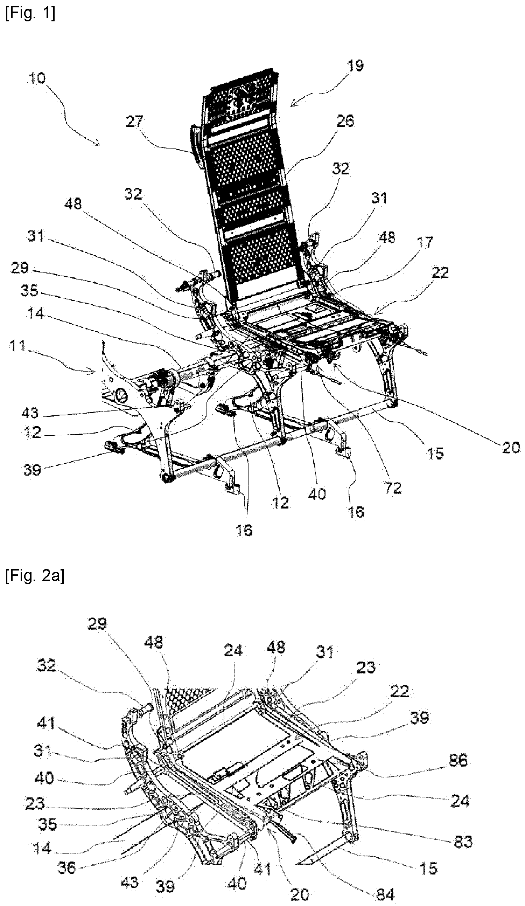

La figure 1 montre un siège 10 de classe économique de type premium comportant une structure basse 11 destinée à être fixée sur des rails d'une cabine avion. A cet effet, la structure basse 11 comporte des pieds 12 fixés à une poutre supérieure 14 et à une poutre inférieure 15. Les pieds 12 sont munis d'attaches 16 destinées à coopérer avec des rails montés sur un plancher de la cabine d'avion.

Le siège 10 comporte au moins une assise 17 et au moins un dossier 19 monté rotatif par rapport à l'assise 17. Le siège 10 pourra comporter plusieurs assises 17 et plusieurs dossiers 19 de façon à définir plusieurs places. Le siège 10 est apte à prendre notamment une position relevée dite position TTL (pour "Taxi-Take Off-Landing" en anglais) qui est utilisée lors des phases de stationnement, de décollage, et d'atterrissage de l'avion. Le siège 10 est également apte à prendre une position de confort dans laquelle l'assise 17 est avancée par rapport à la structure basse 11 et inclinée d'un angle par rapport à un plan horizontal parallèle au plancher de l'aéronef, et le dossier est incliné d'un angle par rapport à un plan vertical. Dans un exemple de réalisation, l'angle d'inclinaison de l'assise 17 est compris entre 10 et 20 degrés; tandis que l'angle d'inclinaison du dossier est compris entre 30 et 60 degrés et vaut de préférence de l'ordre de 45 degrés.

Un actionneur motorisé 20 permet de faire passer le siège 10 de façon automatique d'une position extrême à une autre. Le siège 10 pourra occuper des positions intermédiaires entre la position relevée et la position de confort.

Plus précisément, l'assise 17 comporte une structure d'assise 22 montée mobile par rapport à la structure basse 11 le long du ou des éléments de guidage 39 décrits plus en détails ci-après. La structure d'assise 22 comprend deux longerons 23 et deux traverses d'extrémité 24 assurant une liaison mécanique entre les longerons 23, tel que cela est montré sur la figure 2a. La structure d'assise 22 pourra être recouverte d'une feuille de tôle sur laquelle est disposé un coussin d'assise (non représenté). Le coussin d'assise est fixé de façon amovible sur la structure d'assise 22 par exemple au moyen d'un dispositif à crochets et boucles de type Velcro (marque déposée).

Le dossier 19 comporte une structure de dossier 26 recouverte d'une feuille de tôle 27 sur laquelle est disposé un coussin de dossier (non représenté). La structure de dossier 26 est montée articulée par rapport à la structure d'assise 22 par l'intermédiaire d'une liaison pivot 29 à axe horizontal.

Deux crosses 31 sont disposées de part et d'autre de la structure d'assise 22. Chaque crosse 31 en forme de S allongé comporte une interface de fixation 32 avec un accoudoir (non représenté). L'accoudoir pourra être fixe ou mobile entre une position relevée et une position abaissée.

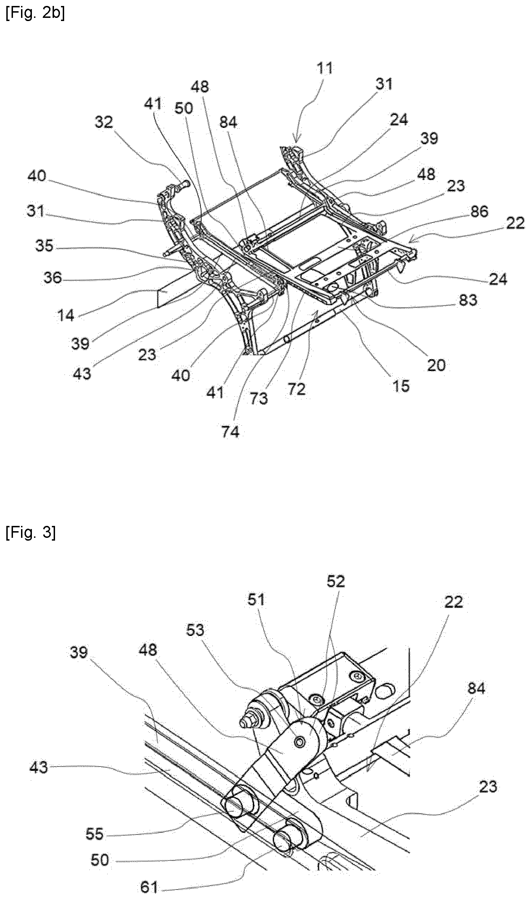

Ces crosses 31 sont liées mécaniquement avec la poutre supérieure 14. À cet effet, comme on peut le voir sur les figures 2a et 2b, chaque crosse 31 présente une ouverture 35 destinée à recevoir la poutre 14. Un organe de fixation 36, tel qu'une vis ou une goupille, s'étend radialement suivant un diamètre de la poutre 14 pour assurer un maintien de l'ensemble. En outre, les crosses 31 sont reliées mécaniquement à la poutre inférieure 15.

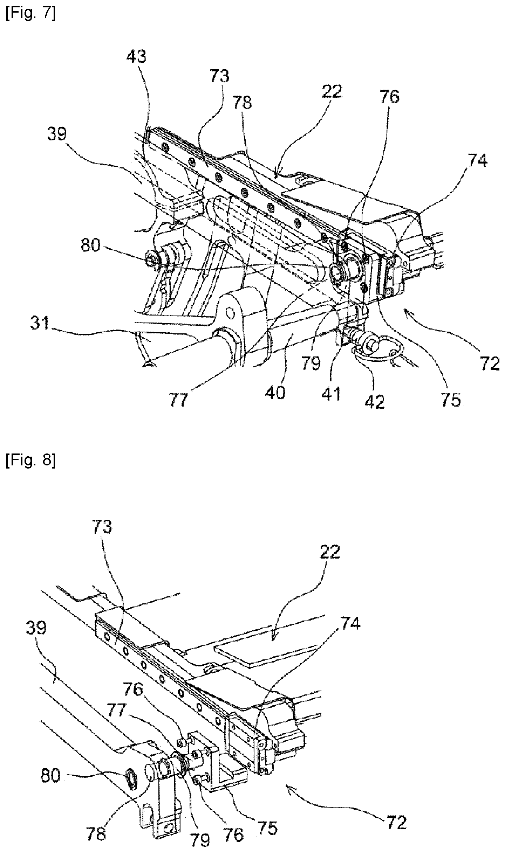

Par ailleurs, deux éléments de guidage 39 de forme allongée sont fixés chacun sur une crosse 31 correspondante. En l'occurrence, un élément de guidage 39 est fixé sur des plots 40 solidaires d'une crosse 31. À cet effet, chaque plot 40 comporte une extrémité insérée à l'intérieur d'un logement 41 prévu dans l'élément de guidage 39. Une goupille 42 visible en figure 7 pourra être utilisée pour maintenir en position l'ensemble.

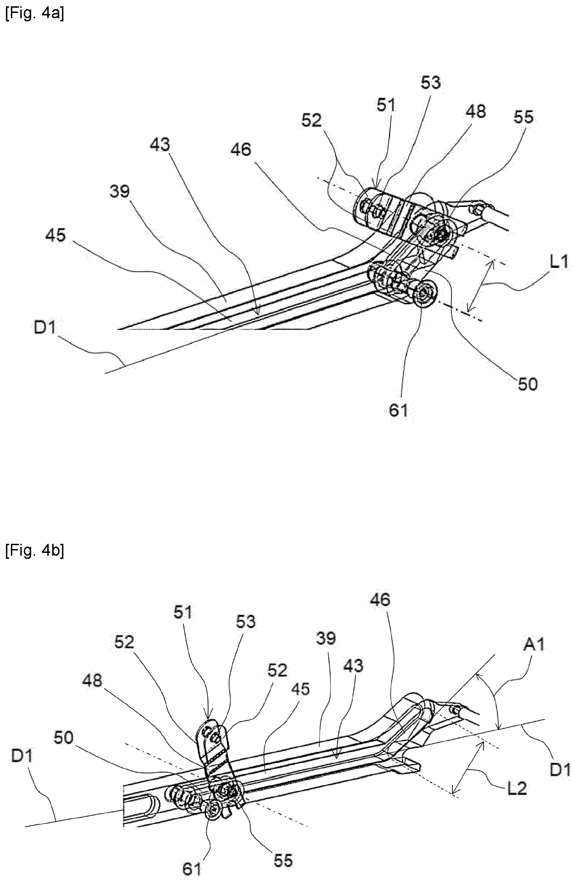

Un élément de guidage 39 s'étend suivant une direction générale d'extension longitudinale D1. L'élément de guidage 39 comporte une rainure de guidage 43 ménagée dans une face interne tournée vers la structure d'assise 22. Comme on peut le voir sur les figures 4a et 4b, la rainure de guidage 43 comporte une première portion 45 qui est représentée comme étant rectiligne sur les figures et qui s'étend suivant la direction générale d'extension longitudinale D1. Toutefois, pour d'autres modèles de sièges, la première portion 45 pourrait présenter une forme non rectiligne, notamment une forme incurvée. La rainure de guidage 43 comporte également une deuxième portion, dite portion inclinée 46, plus courte que la première portion 45. La portion inclinée 46 forme un angle A1 montré sur la figure 4b non nul, c'est-à-dire différente de zéro degré, par rapport à la direction générale d'extension longitudinale D1. L'angle A1 est de préférence compris entre 40° et 90°. Autrement dit, l'élément de guidage 39 comporte une première partie s'étendant longitudinalement suivant la direction d'extension longitudinale D1 dans laquelle est réalisée la première portion 45 de la rainure qui pourra être rectiligne ou non suivant la configuration du siège et une deuxième partie dans laquelle est réalisée la portion inclinée 46 de la rainure formant un angle non nul, c'est-à-dire différent de zéro degré, compris entre 40° et 90° par rapport à la direction d'extension longitudinale D1.

Par ailleurs, une attache de ceinture 48 et un support d'attache 50 bien visibles en figure 3, 4a, et 4b sont prévus de chaque côté du siège 10. L'attache de ceinture 48 comporte un dispositif de fixation 51 à une ceinture. Ce dispositif de fixation 51 comporte deux ailes 52 espacées l'une de l'autre ainsi qu'une tige 53 destinée à s'insérer à l'intérieur d'une boucle de ceinture afin d'assurer son maintien sur l'attache 48.

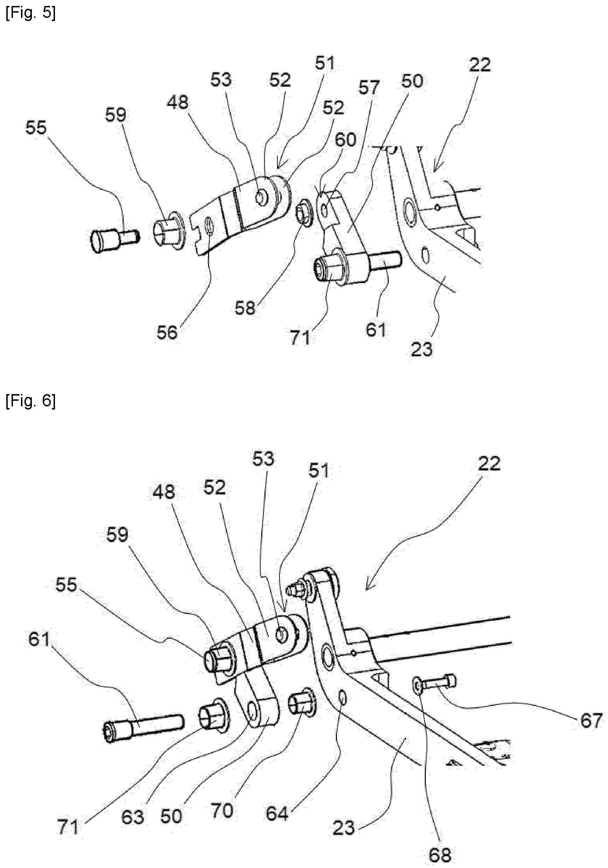

Comme cela est montré sur la figure 5, l'attache de ceinture 48 est montée rotative par rapport au support d'attache 50 par l'intermédiaire d'un axe d'attache 55 muni d'une tête coopérant avec la rainure de guidage 43. Autrement dit, la tête de l'axe d'attache 55 est insérée à l'intérieur de la rainure de guidage 43. A cet effet, comme on peut le voir sur la figure 5, l'axe d'attache 55 de forme cylindrique traverse une ouverture 56 réalisée dans l'attache de ceinture 48 et une ouverture 57 réalisée dans le support d'attache 50. Un coussinet 58 pourra être intercalé entre l'ouverture 56 de l'attache 48 et l'axe d'attache 55 afin de limiter les frottements lors d'une rotation de l'attache 48 autour de l'axe d'attache 55. Un coussinet 59 pourra également recouvrir la tête de l'axe d'attache 55 afin de limiter les frottements avec la rainure de guidage 43.

On pourra prévoir un évidement 60 au niveau de la portion du support d'attache 50 dans laquelle est réalisée l'ouverture 57 de passage de l'axe d'attache 55 de façon à limiter l'épaisseur de l'ensemble assemblé "attache de ceinture 48-support d'attache 50".

Comme on peut le voir sur la figure 6, le support d'attache 50 est monté rotatif par rapport à la structure d'assise 22 par l'intermédiaire d'un axe de support 61 muni d'une tête coopérant avec la rainure de guidage 43. Autrement dit, la tête de l'axe de support 61 est inséré à l'intérieur de la rainure de guidage 43. L'axe de support 61 est lié en translation avec la structure d'assise 22. À cet effet, l'axe de support 61 de forme cylindrique traverse une ouverture 63 réalisée dans le support d'attache 50 et une ouverture 64 réalisée dans un longeron 23 de la structure d'assise 22. Une vis de fixation 67 est vissée à l'intérieur d'une ouverture taraudée réalisée dans l'axe de support 61 afin de solidariser l'axe de support 61 avec le longeron 23 et autoriser une rotation du support d'attache 50 autour de l'axe de support 61. La vis de fixation 67 pourra être associée à une rondelle 68.

Un coussinet 70 pourra être intercalé entre l'ouverture 63 du support d'attache 50 et l'axe de support 61 afin de limiter les frottements lors d'une rotation du support d'attache 50 autour de l'axe de support 61. Un coussinet 71 pourra également recouvrir la tête de l'axe de support 61 afin de limiter les frottements avec la rainure de guidage 43.

La tête de l'axe de support 61 assure ainsi un guidage de la partie arrière de la structure d'assise 22 le long de la rainure de guidage 43 lorsque le siège 10 passe de la position relevée (ou position TTL) à la position de confort, et inversement.

Avantageusement, comme on peut le voir sur la figure 4a, lorsque le siège 10 se trouve dans la position relevée, la tête de l'axe d'attache 55 coopère avec la portion inclinée 46 de la rainure de guidage 43. Lors d'un test de certification, l'effort appliqué par le mannequin sur l'attache de ceinture 48 présente une direction formant un angle proche de 90 degrés par rapport à la rainure de guidage 43. Cet effort pourra être repris majoritairement par la structure basse 11.

De préférence, un écart L1 (cf. figure 4a) mesuré entre l'axe d'attache 55 et l'axe de support 61 est inférieur à une longueur L2 de la portion inclinée 46 de la rainure de guidage 43 (cf. figure 4b). On garantit ainsi un jeu entre l'axe d'attache 55 et l'extrémité de la rainure de guidage 43 afin que les positions relevée et de confort de la cinématique soient gérées électriquement par l'actionneur sans risque d'interférence mécanique. Le jeu est obtenu en ajoutant, à l'extrémité de la rainure de guidage 43, une surcourse de quelques millimètres par rapport à la variation maximale de la position de la structure d'assise lorsque le siège 10 est en position relevée.

Par ailleurs, comme on peut le voir sur les figures 7 et 8, une glissière 72 est apte à assurer un guidage d'une partie avant de la structure d'assise 22. A cet effet, la glissière 72 comporte un rail 73 fixé sur la structure d'assise 22 apte à coulisser suivant un guide 74. Le guide 74 est monté rotatif par rapport à une extrémité avant de l'élément de guidage 39. A cet effet, le guide 74 est fixé sur un support de guide 75 au moyen d'organes de fixation 76, tels que des vis. Le support de guide 75 est muni d'un axe cylindrique 77 coopérant avec une ouverture 78 réalisée dans l'élément de guidage 39 par l'intermédiaire d'un coussinet 79. Afin d'assurer un maintien axial de l'axe cylindrique 77, un circlip 80 pourra coopérer avec une rainure circulaire réalisée dans une périphérie externe de l'axe 77.

Comme cela est visible sur les figures 2a et 2b, afin d'assurer un déplacement automatique du siège 10 d'une position à une autre, l'actionneur motorisé 20 comporte un corps de moteur 83 fixé sur la structure d'assise 22 et une tige de guidage 84 ayant une extrémité fixée sur la structure basse 11. En l'occurrence, le corps de moteur 83 est fixé sur une traverse intermédiaire 86 de la structure d'assise 22 tandis qu'une extrémité de la tige de guidage 84 est montée sur la poutre 14 de support des crosses 31. En variante, la configuration pourra être inversée, c'est-à-dire que le corps de moteur 83 pourra être fixé sur la structure basse 11 tandis que l'extrémité de la tige de guidage 84 pourra être fixée sur la structure d'assise 22.

On décrit ci-après le fonctionnement du siège 10 lorsque le passager souhaite le faire passer d'une position relevée (ou TTL) à une position de confort. En position TTL illustré par la figure 2a, l'assise 17 s'étend dans un plan sensiblement horizontal tandis que le dossier 19 s'étend sensiblement dans un plan vertical. Afin de faire passer le siège 10 en position de confort, le passager active un bouton de commande ce qui met en fonctionnement l'actionneur motorisé 20 qui déplace vers l'avant la structure d'assise 22 comme cela est illustré par la figure 2b. L'extrémité arrière de la structure d'assise 22 est guidée le long de la rainure de guidage 43 via la tête de l'axe de support 61 (cf. figures 4a et 4b) tandis que la partie avant de la structure d'assise 22 est guidée suivant la glissière 72 de telle façon que le rail 73 fixé sur un longeron 23 de la structure d'assise 22 peut coulisser le long du guide 74. La glissière 72 est configurée de telle façon que la structure d'assise 22 forme un angle non nul, c'est-à-dire différent de zéro degré, par rapport à un plan horizontal lorsque le siège 10 se trouve dans la position de confort.

Un déplacement de la structure d'assise 22 vers l'avant pourra entraîner un déplacement vers l'arrière du dossier 19.

L'invention a également pour objet un avion comportant au moins un siège 10.

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications et autres variantes que pourra envisager l'homme du métier dans le cadre de la présente invention et notamment toutes combinaisons des différents modes de fonctionnement décrits précédemment, pouvant être pris séparément ou en association.

## Revendications

1. Siège (10), notamment pour un avion, comportant:
- au moins une assise (17) comportant au moins une structure d'assise (22), et
- une structure basse (11),
- ladite structure d'assise (22) étant mobile par rapport à la structure basse (11),
- la structure basse (11) comportant au moins un élément de guidage (39) s'étendant suivant une direction générale d'extension longitudinale (D1) et comprenant une rainure de guidage (43),
- ladite rainure de guidage (43) comportant une première portion (45) s'étendant suivant la direction générale d'extension longitudinale (D1) et une deuxième portion, dite portion inclinée (46), formant un angle non nul par rapport à la direction générale d'extension longitudinale (D1),
- au moins une attache de ceinture (48),
**caractérisé en ce que** ledit siège (10) comporte en outre au moins un support d'attache (50),
- ladite attache de ceinture (48) étant montée rotative par rapport au support d'attache (50) par l'intermédiaire d'un axe d'attache (55) muni d'une tête coopérant avec la rainure de guidage (43),
- ledit support d'attache (50) étant monté rotatif par rapport à la structure d'assise (22) par l'intermédiaire d'un axe de support (61) muni d'une tête coopérant avec la rainure de guidage (43),
- la tête de l'axe d'attache (55) étant disposée à l'intérieur de la portion inclinée (46) de la rainure de guidage (43) lorsque le siège (10) se trouve dans une position relevée.

2. Siège selon la revendication 1, **caractérisé en ce qu'**un écart (L1) mesuré entre l'axe d'attache (55) et l'axe de support (61) est inférieur à une longueur (L2) de la portion inclinée (46) de la rainure de guidage (43).

3. Siège selon la revendication 1 ou 2, **caractérisé en ce qu'**il comporte un actionneur motorisé (20) de façon à permettre un déplacement automatique dudit siège (10) de la position relevée vers une position de repos.

4. Siège selon la revendication 3, **caractérisé en ce que** l'actionneur motorisé (20) comporte un corps de moteur (83) fixé sur l'un des éléments parmi: la structure d'assise (22) et la structure basse (11), ainsi qu'une tige de guidage (84) ayant une extrémité fixée sur l'autre des éléments parmi: la structure d'assise (22) et la structure basse (11).

5. Siège selon l'une quelconque des revendications 1 à 4, **caractérisé en ce qu'**il comporte une glissière (72) apte à assurer un guidage d'une partie avant de la structure d'assise (22).

6. Siège selon la revendication 5, **caractérisé en ce que** la glissière (72) comporte un rail (73) fixé sur la structure d'assise (22) apte à coulisser suivant un guide (74) monté rotatif par rapport à une extrémité avant de l'élément de guidage (39).

7. Siège selon la revendication 5 ou 6, **caractérisé en ce que** la glissière (72) est configurée de telle façon que la structure d'assise (22) forme un angle non nul par rapport à un plan horizontal lorsque le siège (10) se trouve dans une position de confort.

8. Siège selon l'une quelconque des revendications 1 à 7, **caractérisé en ce que** la structure basse comporte deux crosses (31) disposées de part et d'autre de la structure d'assise (22), l'élément de guidage (39) étant fixé sur une crosse (31) correspondante.

9. Siège selon l'une quelconque des revendications 1 à 8, **caractérisé en ce qu'**il comporte en outre une structure de dossier (26) montée rotative par rapport à la structure d'assise (22).

10. Avion comportant au moins un siège (10) tel que défini selon l'une quelconque des revendications précédentes.

## Patentansprüche

1. Sitz (10), insbesondere für ein Flugzeug, umfassend:
- mindestens eine Sitzfläche (17) mit mindestens einer Sitzflächenstruktur (22), und
- eine niedrige Struktur (11),
- wobei die Sitzflächenstruktur (22) relativ zur niedrigen Struktur (11) beweglich ist,
- wobei die niedrige Struktur (11) mindestens ein Führungselement (39) umfasst, das sich in einer allgemeinen Längserstreckungsrichtung (D1) erstreckt und mit einer Führungsnut (43) versehen ist,
- wobei die Führungsnut (43) einen sich in der allgemeinen Längserstreckungsrichtung (D1) erstreckenden ersten Abschnitt (45) und einen von Null verschiedenen Winkel relativ zur allgemeinen Längserstreckungsrichtung (D1) bildenden zweiten Abschnitt, den sogenannten geneigten Abschnitt (46) umfasst,
- mindestens eine Gurtschnalle (48),
**dadurch gekennzeichnet, dass** der Sitz (10) ferner mindestens eine Schnallenhalterung (50) umfasst,
- wobei die Gurtschnalle (48) mittels einer Schnallenachse (55), die mit einem mit der Führungsnut (43) zusammenwirkenden Kopf versehen ist, relativ zur Schnallenhalterung (50) drehbar gelagert ist,
- wobei die Schnallenhalterung (50) mittels einer Halterungsachse (61), die mit einem mit der Führungsnut (43) zusammenwirkenden Kopf versehen ist, relativ zur Sitzflächenstruktur (22) drehbar gelagert ist,
- wobei der Kopf der Schnallenachse (55) in der angehobenen Position des Sitzes (10) innerhalb des geneigten Abschnitts (46) der Führungsnut (43) angeordnet ist.

2. Sitz nach Anspruch 1, **dadurch gekennzeichnet, dass** ein zwischen der Schnallenachse (55) und der Halterungsachse (61) gemessener Abstand (L1) kleiner als eine Länge (L2) des geneigten Abschnitts (46) der Führungsnut (43) ist.

3. Sitz nach Anspruch 1 oder 2, **dadurch gekennzeichnet, dass** er einen motorisierten Aktuator (20) umfasst, um eine automatische Bewegung des Sitzes (10) aus der angehobenen Position in eine Ruheposition zu ermöglichen.

4. Sitz nach Anspruch 3, **dadurch gekennzeichnet, dass** der motorisierte Aktuator (20) einen Motorkörper (83), der an einem der Elemente unter der Sitzflächenstruktur (22) und der niedrigen Struktur (11) befestigt ist, sowie eine Führungsstange (84), deren eines Ende an dem anderen der Elemente unter der Sitzflächenstruktur (22) und der niedrigen Struktur (11) befestigt ist, umfasst.

5. Sitz nach einem der Ansprüche 1 bis 4, **dadurch gekennzeichnet, dass** er eine Gleitbahn (72) umfasst, die einen vorderen Teil der Sitzflächenstruktur (22) führen kann.

6. Sitz nach Anspruch 5, **dadurch gekennzeichnet, dass** die Gleitbahn (72) eine an der Sitzflächenstruktur (22) befestigte Schiene (73) umfasst, die entlang einer Führung (74) gleiten kann, die relativ zu einem vorderen Ende des Führungselements (39) drehbar montiert ist.

7. Sitz nach Anspruch 5 oder 6, **dadurch gekennzeichnet, dass** die Gleitbahn (72) so ausgebildet ist, dass die Sitzflächenstruktur (22) in einer Komfortposition des Sitzes (10) einen von Null verschiedenen Winkel relativ zu einer Horizontalebene bildet.

8. Sitz nach einem der Ansprüche 1 bis 7, **dadurch gekennzeichnet, dass** die niedrige Struktur zwei Querträger (31) umfasst, die auf beiden Seiten der Sitzflächenstruktur (22) angeordnet sind, wobei das Führungselement (39) an einem entsprechenden Querträger (31) befestigt ist.

9. Sitz nach einem der Ansprüche 1 bis 8, **dadurch gekennzeichnet, dass** er außerdem eine Rückenlehnenstruktur (26) umfasst, die relativ zur Sitzflächenstruktur (22) drehbar montiert ist.

10. Flugzeug mit mindestens einem Sitz (10) gemäß einem der vorhergehenden Ansprüche.

## Claims

1. A seat (10), in particular for an aircraft, comprising:
- at least one seating pan (17) comprising at least one seating pan structure (22), and
- a low structure (11),
- said seat structure (22) being movable relative to the low structure (11),
- the low structure (11) comprising at least one guide element (39) extending in a general direction of longitudinal extension (D1) and comprising a guide groove (43),
- said guide groove (43) comprising a first portion (45) extending in the general direction of longitudinal extension (D1) and a second portion, so-called inclined portion (46), forming a non-zero angle relative to the general direction of longitudinal extension (D1),
- at least one belt clip (48),
**characterized in that** said seat (10) further comprises at least one clip support (50),
- said belt clip (48) being rotatably mounted relative to the clip support (50) by means of a clip axis (55) provided with a head cooperating with the guide groove (43),
- said clip support (50) being rotatably mounted relative to the seating pan structure (22) by means of a support pin (61) provided with a head cooperating with the guide groove (43),
- the head of the clip pin (55) being arranged inside the inclined portion (46) of the guide groove (43) when the seat (10) is in a raised position.

2. The seat according to claim 1, **characterized in that** a distance (L1) measured between the clip pin (55) and the support pin (61) is less than a length (L2) of the inclined portion (46) of the guide groove (43).

3. The seat according to claim 1 or 2, **characterized in that** it comprises a motorized actuator (20) so as to allow automatic movement of said seat (10) from the raised position to a rest position.

4. The seat according to claim 3, **characterized in that** the motorized actuator (20) comprises a motor body (83) fixed to one of the seating pan structure (22) and the low structure (11), as well as a guide rod (84) having one end fixed to the other of the seating pan structure (22) and the low structure (11).

5. The seat according to any one of the claims 1 to 4, **characterized in that** it comprises a slide (72) capable of guiding a front part of the seating pan structure (22).

6. The seat according to claim 5, **characterized in that** the slide (72) comprises a rail (73) fixed to the seating pan structure (22) capable of sliding along a guide (74) rotatably mounted relative to a front end of the guide element (39).

7. The seat according to claim 5 or 6, **characterized in that** the slide (72) is configured so that the seating pan structure (22) forms a non-zero angle relative to a horizontal plane when the seat (10) is in a comfort position.

8. The seat according to any one of the claims 1 to 7, **characterized in that** the low structure comprises two crossheads (31) arranged on either side of the seating pan structure (22), the guide element (39) being fixed on a corresponding crosshead (31).

9. The seat according to any one of the claims 1 to 8, **characterized in that** it further comprises a backrest structure (26) rotatably mounted relative to the seating pan structure (22).

10. An aircraft comprising at least one seat (10) as defined according to any one of the preceding claims.
